# EUROPÄISCHE PATENTANMELDUNG

(11) **EP 4 159 880 A1**
(43) Veröffentlichungstag der Anmeldung: **05.04.2023**
(21) Anmeldenummer: 22195877.0
(22) Anmeldetag: 15.09.2022
(51) Int. Cl.: C21D 1/42, C21D 1/60, C21D 1/613, C21D 1/63, C21D 8/04, C21D 9/48, C22C 38/00, C21D 9/56, C21D 9/573, C21D 9/60, C23C 2/00

(54) **KALTGEWALZTES STAHLFLACHPRODUKT FÜR VERPACKUNGEN UND VERFAHREN ZUR HERSTELLUNG EINES STAHLFLACHPRODUKTS**

(30) Priorität: 04.10.2021 DE 102021125692
(71) Anmelder: ThyssenKrupp Rasselstein GmbH, 56626 Andernach (DE)
(72) Erfinder: Kaup, Burkhard, 56626 Andernach (DE); Kirchesch, Peter, 56068 Koblenz (DE); Köhl, Manuel, 56743 Mending (DE); Nouskalis, Dimitrios, 56659 Burgbrohl (DE); Gossen, Alexander, 56579 Rengsdorf (DE); Ehmke, Björn, 56727 Sankt Johann (DE)
(74) Vertreter: Charrier Rapp & Liebau

(57) **Zusammenfassung**

Die Erfindung offenbart ein kaltgewalztes Stahlflachprodukt für Verpackungen aus einem kohlenstoffarmen Stahl mit einer Dicke von weniger als 0,49 mm und ein Verfahren zu seiner Herstellung, wobei das Stahlflachprodukt ein martensitfreies Gefüge sowie eine Planheit von 5 I-Units oder weniger aufweist. Das Stahlflachprodukt stellt dabei eine Standardgüte für Verpackungen mit Zugfestigkeiten im Bereich von 300 bis 550 MPa dar, welches aus einem kaltgewalzten Stahlblech mit einem Kohlenstoffanteil im Bereich von 0,01 bis 0,1 Gew.% durch induktives Glühen des Stahlblechs und einer nachgelagerten Wasserkühlung zum Abschrecken des rekristallisierend geglühten Stahlblechs herstellbar ist. Um die Planheit von 5 I-Units oder weniger zu erzielen, wird das induktiv geglühte Stahlblech in dem Herstellungsverfahren zunächst primär auf eine Absprungtemperatur mit einer primären Kühlrate von weniger als 1000 K/s, bevorzugt von weniger als 400 K/s und insbesondere weniger als 200 K/s abgekühlt, wobei die Absprungtemperatur (Tq) unterhalb der Umwandlungstemperatur von 723°C liegt und bevorzugt kleiner als 690°C ist, und danach ein sekundäres Abkühlen des Stahlblechs durch eine Wasserkühlung mit einer Wassertemperatur (T_{f}) von weniger als 80°C mit einer sekundären Kühlrate von mehr als 1000 K/s erfolgt.

## Beschreibung

Die Erfindung betrifft ein Kaltgewalztes Stahlflachprodukt für Verpackungen mit einer Dicke von weniger als 0,49 mm sowie ein Verfahren zur Herstellung eines solchen Stahlflachprodukts.

Bei der Herstellung von Stahlflachprodukten wie kaltgewalzte Stahlbleche und Stahlbänder für Verpackungen erfolgt nach dem (primären) Kaltwalzen ein Glühen des Stahlflachprodukts bei Temperaturen oberhalb der Rekristallisationstemperatur, um den ursprünglichen Gefügezustand des Stahls und die Umformbarkeit wiederherzustellen. Insbesondere bei Stahlflachprodukten für die Herstellung von Verpackungen, wie Getränkedosen oder Konservendosen, ist eine gute Umformbarkeit ein wichtiger Materialparameter, da die Stahlflachprodukte bei der Herstellung solcher Verpackungen in Tiefzieh- und Abstreckziehverfahren starken Verformungen unterzogen werden. Um diesen Verformungen bei der Verpackungsherstellung standzuhalten, müssen die Stahlflachprodukte darüber hinaus auch eine hohe Festigkeit aufweisen.

Aus Gründen der Gewichtsreduktion und eines geringeren Materialeinsatzes werden zur Herstellung von Verpackungen zunehmend dünnere Stahlflachprodukte verwendet. Bei sehr dünnen Stahlflachprodukten, die teilweise eine Dicke von weniger als 0,2 mm haben, ist eine weitere Erhöhung der Festigkeit des eingesetzten Stahls erforderlich, um eine ausreichende Stabilität der daraus hergestellten Verpackungen zu gewährleisten. Im Stand der Technik wurden daher Konzepte zur Herstellung von höherfesten Stahlflachprodukten mit Zugfestigkeiten von mehr als 550 MPa entwickelt. Aus der DE 102011 056 847 A1 ist bspw. ein Verfahren zur Herstellung von Stahlblechen zur Verwendung als Verpackungsstahl bekannt, mit dem kaltgewalzte Stahlbleche mit Zugfestigkeiten von mehr als 500 MPa bei einer Bruchdehnung von mehr als 5% hergestellt werden können. Die hohe Zugfestigkeit wird dabei durch die Ausbildung eines mehrphasigen Gefüges mit einer harten Martensitphase erzielt. Zur Ausbildung des Mehrphasengefüges erfolgt beim Rekristallisationsglühen des kaltgewalzten Stahlflachprodukts zunächst ein schnelles Aufheizen mittels magnetischer Induktion auf Glühtemperaturen oberhalb der Acl-Temperatur und anschließend ein schnelles Abkühlen mit einer Wasserkühlung, so dass sich die beim induktiven Erwärmen auf die Glühtemperatur im Stahl ausgebildete Austenitphase in Martensit umwandelt.

Die aus der DE 10 2011 056 847 A1 bekannte induktive Erwärmung des Stahlflachprodukts beim Rekristallisationsglühen ist auch unter dem Gesichtspunkt der Reduzierung von klimaschädlichen Abgasen vorteilhaft. Bei den herkömmlichen Aufheizmethoden werden die Stahlflachprodukte zum Glühen in einem Haubenglühofen oder in einem Durchlaufglühofen durch Wärmeleitung oder Wärmestrahlung erhitzt. Dabei werden die Glühöfen in der Regel mit fossilen Brennstoffen betrieben, weshalb klimaschädliche Emissionen, insbesondere Kohlendioxid und Stickoxide, entstehen. Ein Induktionsofen wird dagegen mit elektrischer Energie versorgt und kann daher auch klimafreundlich mit regenerativ erzeugtem Strom betrieben werden.

Allerdings fallen für die Bereitstellung eines Induktionsofens hohe Investitionskosten an. Da höherfeste Stahlflachprodukte mit Zugfestigkeiten von mehr als 550 MPa im Bereich der Verpackungsstähle nur ein Nischenprodukt sind, die nur einen geringen Anteil am Gesamtmarkt der Verpackungsstahlerzeugnisse darstellen, ist es aus wirtschaftlichen Gründen erforderlich, in einer Glüheinrichtung mit einem Induktionsofen und einer nachgelagerten Wasserkühlung zum Abschrecken der rekristallisierend geglühten Stahlbleche nicht nur höherfeste Stahlflachprodukte sondern auch solche im Bereich der sogenannten Standardgüten mit Zugfestigkeiten im Bereich von 300 bis 550 MPa herstellen zu können.

Bei solchen Standardgüten mit geringerer Festigkeit ergeben sich jedoch aufgrund der schnellen Temperaturwechsel zwischen dem schnellen Aufheizen im Induktionsofen und dem raschen Abkühlen in der Wasserkühlung Probleme mit der Planheit der geglühten Stahlflachprodukte.

Hiervon ausgehend liegt der Erfindung die Aufgabe zu Grunde, Stahlflachprodukte in Standardgüten für die Herstellung von Verpackungen bereit zu stellen, die in einem schnellen Verfahren kostengünstig, energieeffizient und klimaschonend mit einer reduzierten Erzeugung klimaschädlicher Emissionen rekristallisierend geglüht werden können und eine für die Herstellung von Verpackungen ausreichende Planheit aufweisen.

Diese Aufgabe wird mit dem Stahlflachprodukt gemäß Anspruch 1 und dem Verfahren gemäß Anspruch 6 gelöst. Bevorzugte Ausführungsformen des Stahlflachprodukts und des Verfahrens ergeben sich aus den abhängigen Ansprüchen.

Das erfindungsgemäße Stahlflachprodukt für Verpackungen wird aus einem Stahl mit folgender Zusammensetzung in Bezug auf das Gewicht hergestellt:
- C: 0,01 - 0,1 %,
- Si: < 0,03 %,
- Mn: < 0,6 %,
- P: < 0,1 %,
- S: < 0,03 %,
- Al: < 0,1 %,
- N: < 0,07 %,
- Rest Eisen und unvermeidbare Verunreinigungen,
wobei aus einer Stahlschmelze mit dieser Zusammensetzung eine Bramme gegossen und aus der Bramme durch Warmwalzen ein Warmband erzeugt wird, welches durch Kaltwalzen bei einem Reduktionsverhältnis von mindestens 80 % zu einem kaltgewalzten Stahlband auf eine Dicke von weniger als 0,49 mm gebracht wird, und das kaltgewalzte Stahlband danach in einem Durchlaufglühofen bei einer Glühtemperatur oberhalb der Rekristallisationstemperatur rekristallisierend geglüht wird, wobei das kaltgewalzte Stahlband in dem Durchlaufglühofen induktiv auf die Glühtemperatur erhitzt und über eine vorgegebene Haltezeit gehalten wird. Nach Ablauf der Haltezeit wird das geglühte Stahlband in einem primären Abkühlschritt auf eine Absprungtemperatur (Tq), die unterhalb der Umwandlungstemperatur (Ac1) von 723°C und bevorzugt unterhalb der Rekristallisationstemperatur liegt und besonders bevorzugt kleiner als 690°C, insbesondere kleiner als 600°C ist, mit einer primären Kühlrate von maximal 1000 K/s, bevorzugt weniger als 400 K/s und insbesondere weniger als 200 K/s abgekühlt und unmittelbar anschließend erfolgt in einem sekundären Abkühlschritt eine Abkühlung des Stahlbands auf eine Temperatur von weniger als 80°C mit einer sekundären Kühlrate von mehr als 1000 K/s, bevorzugt mehr als 1500 K/s und insbesondere mehr als 2000 K/s.

Dabei wird das Stahlband zum Glühen in dem Durchlaufglühofen induktiv mit einer Heizrate von bevorzugt mehr als 100 K/s und bevorzugt mit einer Heizrate von mehr als 300 K/s, insbesondere mit einer Heizrate von 400 K/s bis 600 K/s, auf die Glühtemperatur erhitzt.

Aufgrund der primären Abkühlung, die mit einer gegenüber der sekundären Abkühlung wesentlich geringeren Kühlrate erfolgt und das Stahlband unter die Umwandlungstemperatur (Ac1) von 723°C abkühlt, entsteht in dem Stahl kein Martensit. Da im realen Stahlgefüge keine Gleichgewichtsbedingungen vorliegen, können auch noch unterhalb der Ac1-Umwandlungstemperatur Martensitinseln festgestellt werden, weshalb zur Vermeidung einer Martinsitphase in der primären Abkühlung bevorzugt auf Temperaturen unterhalb von 690°C, besonders bevorzugt auf 650°C oder weniger und insbesondere auf eine Absprungtemperatur im Bereich von 500°C bis 600°C abgekühlt wird. Absprungtemperaturen unterhalb von 500°C sind zwar möglich, erfordern jedoch eine höhere Kühlleistung beim primären Kühlen des geglühten Stahlbands und sind deshalb nicht zu bevozugen. Das mit dem erfindungsgemäßen Verfahren hergestellte Stahlflachprodukt zeichnet sich durch ein martensitfreies Gefüge aus, wenn die Absprungtemperatur unterhalb der Ac1-Umwandlungstemperatur und bevorzugt unterhalb von 690°C liegt. Das Stahlgefüge des erfindungsgemäßen Stahlflachprodukts besteht zumindest im Wesentlichen, d.h. bevorzugt zu mehr als 90 % und besonders bevorzugt zu mehr als 95 % nur aus Ferrit. In manchen Fällen können neben Ferrit noch Bestandteile von Zementit und/oder Perlit und/oder Restaustenit vorhanden sein. Bevorzugt enthält das Stahlgefüge des erfindungsgemäßen Stahlflachprodukts weder Martensit noch Bainit oder Austenit. Diese bevorzugten Gefügestrukturen werden in dem Herstellungsverfahren gemäß der Erfindung insbesondere durch die Kühlbedingungen beim Abkühlen des kaltgewalzten Stahlbands nach dem Glühen gewährleistet.

Die primäre Kühlrate, mit der das Stahlband von der Glühtemperatur auf die Absprungtemperatur (Tq) gekühlt wird, beträgt zur Erzielung einer möglichst geringen Kühldauer bevorzugt mindestens 25 K/s. Um das primäre Abkühlen mit einer reinen Gaskühlung durchführen zu können, ist die primäre Kühlrate auf maximal 1000 K/s, bevorzugt auf weniger als 400 K/s und insbesondere auf weniger als 200 K/s begrenzt. Um das primäre Abkühlen mit einer Stickstoff-Gaskühlung durchführen zu können, liegt die primäre Kühlrate aus apparativen Gründen bevorzugt im Bereich von 25 K/s und 400 K/s. Das Produkt der Dicke des Stahlbands und der primären Kühlrate, welches für eine geeignete apparative Auswahl der Kühlvorrichtung für die primäre Kühlung relevant ist, liegt bevorzugt zwischen 5 K s⁻¹ mm und 200 K s⁻¹ mm.

Im Vergleich zu Stahlflachprodukten mit einer vergleichbaren Komposition, insbesondere mit einem niedrigen Kohlenstoffanteil im Bereich von 0,01 bis 0,1 Gew. % ("low carbon", LC), und einem mehrphasigen Stahlgefüge, das eine harte Martensitphase umfasst, weisen die Stahlflachprodukte gemäß der Erfindung eine niedrigere Festigkeit und eine niedrigere Streckgrenze auf. In einem gealterten Zustand weisen die erfindungsgemäßen Stahlflachprodukten bspw. eine 0,2%-Streckgrenze (Rp0,2) von 300 MPa bis 700 MPa auf. Die Bruchdehnung (A) der erfindungsgemäßen Stahlflachprodukte liegt bevorzugt in einem gealterten Zustand im Bereich von 10 % bis 35 % und besonders bevorzugt von 20 % bis 30 %. Der gealterte Zustand des Stahlflachprodukts wird dabei entweder auf natürliche Weise durch eine längere Lagerung und/oder durch eine Lackierung mit anschließender Trocknung, oder auf künstliche Weise durch Erwärmung des Stahlflachprodukts für 20 Minuten auf Temperaturen im Bereich von 200°C bis 210 °C herbeigeführt. Die mechanischen Parameter der Spannungs-Dehnungs-Kurve der erfindungsgemäßen Stahlflachprodukte entsprechen damit den Werten von Standardgüten für die Herstellung von Verpackungen.

Die Festigkeiten der Stahlflachprodukte hängen dabei von der mechanischen Nachbehandlung nach dem Kühlen ab. Bei einfach kaltgewalzten Stahlblechen ("Single Reduced", SR), die nach dem Kühlen mit einem Dressiergrad von maximal 5 % dressiert (d.h. kalt nachgewalzt) worden sind, liegt die Streckgrenze der erfindungsgemäßen Stahlflachprodukte im Bereich von 300 bis 500 MPa und bei zweifach kaltgewalzten Stahlblechen ("Double Reduced", DR) liegt die Streckgrenze der erfindungsgemäßen Stahlflachprodukte im Bereich von 430 bis 700 MPa. Die Zugfestigkeiten liegen jeweils ca. 25 MPa höher als die Werte der Streckgrenzen.

Um diese bevorzugten Bereiche für die Festigkeit bzw. die Streckgrenze der erfindungsgemäßen Stahlflachprodukte einzuhalten, wird die Absprungtemperatur beim Kühlen des rekristallisierend geglühten Stahlbands besonders bevorzugt unterhalb von 600°C und insbesondere in dem bevorzugten Bereich von 500°C bis 600°C gehalten.

Mit dem erfindungsgemäßen Verfahren lassen sich daher aufgrund der zweistufigen Abkühlung nach dem Rekristallisationsglühen mit einer langsameren, primären Abkühlung und einer schnellen, sekundären Abkühlung Verpackungsblecherzeugnisse mit Festigkeiten und Bruchdehungen im Bereich der Standardgüten herstellen, obwohl durch die schnelle induktive Aufheizung und das sekundäre schnelle Abkühlen hohe Temperaturdifferenzen in kurzer Zeit durchlaufen werden. Das Verfahren gemäß der Erfindung ermöglicht daher trotz einer sehr schnellen und energieeffizienten sowie emissionsarmen thermischen Behandlung, die eine Kombination einer induktiven Erwärmung und einer schnellen Abkühlung mit Wasser (Wasserabschreckung) umfasst, eine kostengünstige und umwelt- und klimaschonende Herstellung von Stahlflachprodukten für Verpackungen im Bereich der Standardgüten. Dabei können die Vorteile einer induktiven Erwärmung ausgenutzt werden, insbesondere die Ausbildung eines sehr kurzen Durchlaufglühofens (wodurch eine sehr schnelle und effiziente Verfahrensführung sowie geringere Investitionskosten gewährleistet werden), geringere Betriebs- und Wartungskosten (im Vergleich zu herkömmlich mit fossilen Brennstoffen betriebenen Glühöfen mit konventionellen Strahlheizrohren), ein emissionsarmer Betrieb (da der Induktionsofen mit regenerativ erzeugtem Strom betrieben werden kann und keine Stickoxide entstehen) und ein schnelles An- und Abschalten der Bandglühanlage ohne Aufheiz- oder Abkühlphasen sowie schnelle Temperaturwechsel während eines Glühprozesses. Schließlich weist ein Induktionsofen im Vergleich zu herkömmlichen Glühöfen mit Strahlheizrohren einen wesentlich besseren Wirkungsgrad auf, weshalb das erfindungsgemäße Verfahren eine sehr gute Energieeffizienz aufweist.

Die Glühdauer, in der das kaltgewalzte Stahlband beim Glühen in dem Durchlaufglühofen verbleibt und die sich aus der Heizdauer für das Aufheizen des Stahlbands auf die Glühtemperatur und der Haltezeit zusammensetzt, ist dabei aufgrund der induktiven Erwärmung sehr kurz. Die Heizdauer liegt dabei, je nach Heizrate, im Bereich von 1 bis 6 Sekunden. Um ein vollständiges Rekristallisieren des Stahlgefüges sicher zu stellen, reicht, je nach Glühtemperatur und Rekristallisationstemperatur, eine Glühdauer von weniger als 5 Sekunden, häufig von weniger als 1 Sekunde aus. Während der Haltezeit bleibt das Stahlband auf einer Temperatur oberhalb der Rekristallisationstemperatur. Die Haltezeit wird in dem erfindungsgemäßen Verfahren bevorzugt zwischen 0,5 und 2,0 Sekunden eingestellt und liegt besonders bevorzugt unter 1 Sekunde, insbesondere zwischen 0,60 und 0,95 Sekunden.

Die Glühtemperatur liegt bevorzugt zwischen 690°C und 769°C. Die Obergrenze von 769°C wird dabei durch die Curie-Temperatur festgelegt, die beim induktiven Erwärmen von Stahl nicht überschritten werden kann. Eine Glühtemperatur von 690°C reicht für ein vollständiges Rekristallisieren des Stahlgefüges innerhalb einer bevorzugten Glühdauer von weniger als 5 Sekunden aus und stellt daher eine vorteilhafte Untergrenze für die Glühtemperatur dar. Mit steigender Glühtemperatur nimmt die für ein vollständiges Rekristallisieren erforderliche Glühdauer ab. Bei einer Glühdauer von weniger als 1 Sekunde ist eine Glühtemperatur von 725°C erforderlich, weshalb der Bereich von 725°C bis 769°C ein besonders bevorzugter Bereich für die Glühtemperatur ist.

Das primäre Abkühlen des Stahlbands nach einer vollständigen Rekristallisation in dem Induktionsofen erfolgt bevorzugt durch eine Gaskühlung, insbesondere durch einen Gasstrahl. Das sekundäre Abkühlen erfolgt bevorzugt durch eine Wasserkühlung, insbesondere durch eine Wasserabschreckung durch Eintauchen des Stahlbands in ein Wasserbad mit einer Wassertemperatur von weniger als 95°C, bevorzugt 80°C oder weniger. Aus energetischen Gründen ist eine möglichst hohe Wassertemperatur von bis zu 95°C sinnvoll da das Kühlwasser bei diesen Temperaturen in anderen Prozessen mit bestmöglichem Wirkungsgrad als Heizmedium weiterverwendet werden kann. Eine Wassertemperatur von mehr als 80°C sollte jedoch vermieden werden, da das Kühlwasser ansonsten beim Eintauchen des Stahlbandes in das Wasserbad so stark verdampft, wodurch sich die Kühldauer aufgrund des Leidenfrost-Phänomens durch eine Dampfschicht zwischen dem Stahlband und dem Kühlwasser verlängern kann. Zur Optimierung der Bandplanheit sind allerdings niedrigere Wassertemperaturen von 25°C oder weniger zu bevorzugen. Ein bevorzugter Bereich der Wassertemperatur liegt daher zwischen 10°C und 80°C, besonders bevorzugt von 15°C bis 50°C.

Weiterhin weist das erfindungsgemäße Stahlflachprodukt in überraschender Weise auch eine sehr gute Planheit auf. Die Planheit des erfindungsgemäßen Stahlflachprodukts lässt sich durch die Messverfahren quantifizieren, die in dem ASTM-Standard A 1030/A1030M-11 "Standard Practice for Measuring Flatness Characteristics of Steel Sheet Products" definiert sind. Unter der Annahme, dass die Unebenheiten von Stahlflachprodukten (worunter Stahlbleche und Stahlbänder verstanden werden) im Wesentlichen einer Sinusform entsprechen, kann die Planheit von Stahlflachprodukten in "I-Units" nach der in der o.g. Norm angegebenen Berechnung ausgedrückt werden. Häufig sind Walzanlagen zum Kaltwalzen oder Dressieren von Stahlflachprodukten mit Messgeräten ausgestattet, die die Planheit des kaltgewalzten oder dressierten Stahlflachprodukts (auch bei anders geformten Planheitsdefekten) direkt in I-Units erfassen. Die erfindungsgemäßen Stahlflachprodukte weisen eine Planheit von 5 I-Units oder weniger auf.

Die gute Planheit der Stahlflachprodukte gemäß der Erfindung lässt sich ebenfalls auf die zweistufige Abkühlung nach dem Rekristallisationsglühen zurückführen. Aufgrund der primären Abkühlung mit einer gegenüber der sekundären Abkühlung wesentlich geringeren primären Kühlrate von bevorzugt weniger als 400 K/s wird das rekristallisierend geglühte Stahlband vorgekühlt, bevor es in der sekundären Abkühlung mit der sehr hohen sekundären Kühlrate von bevorzugt mehr als 1000 K/s bis auf Temperaturen unterhalb von 80°C abgekühlt wird. Dadurch entstehen insbesondere in der Phase unmittelbar nach Verlassen des Durchlaufglühofens und während der primären Abkühlung geringere Spannungen im Stahlgefüge. Wegen der geringeren Spannungen kommt es weniger zur Ausbildung von Unebenheiten. Da das Stahlband bei der primären Abkühlung auf Temperaturen unterhalb der Rekristallisationstemperatur und insbesondere auf Temperaturen von weniger als 600°C abgekühlt wird, hat sich das Stahlgefüge bereits nach der primären Abkühlung ausgebildet, weshalb bei der nachfolgenden sekundären Abkühlung mit der sehr hohen sekundären Kühlrate keine nennenswerten Spannungen und daher kaum mehr Unebenheiten in dem Stahlband erzeugt werden.

Die Planheit des erfindungsgemäßen Stahlflachprodukts kann auch durch eine Randwelligkeit mit einer maximalen Wellenhöhe (h) von 1,5 mm, bevorzugt von weniger als 1,0 mm, charakterisiert werden. Ein weiteres Charakteristikum für eine gute Planheit kann die Anzahl der Wellen entlang einer vorgegebenen Länge des Stahlbands sein, die bei dem erfindungsgemäßen Stahlflachprodukt bei weniger als sechs Wellen mit einer Wellenhöhe (h) von mehr als 1,0 mm pro Meter Länge des Stahlbands in Walzrichtung liegt.

Ein wichtiger Verfahrensparameter des erfindungsgemäßen Verfahrens, der die Planheit der erfindungsgemäß hergestellten Stahlflachprodukte beeinflusst, ist die Absprungtemperatur (Tq), bei der das sekundäre Abkühlen (Wasserabschreckung) eingeleitet wird. Diese wird bestimmt durch die Glühtemperatur, von der aus das Stahlband beim primären Abkühlen gekühlt wird, sowie der primären Kühlrate und der Kühldauer der primären Kühlung. Unterhalb einer kritischen Absprungtemperatur (Tq) von ca. 715°C weisen die Stahlflachprodukte eine gute Planheit im erfindungsgemäßen Bereich von 5 I-Units oder weniger auf. Oberhalb dieser kritischen Absprungtemperatur ist an den Bandkanten eine lineare Zunahme der Planheitsdefekte, ausgedrückt durch I-Units, zu beobachten. Die Absprungtemperatur liegt daher bevorzugt unter 715°C. Weiterhin kann bei Absprungtemperaturen von mehr als 700°C die Ausbildung eines mehrphasigen Gefüges beobachtet werden, das Martensit und/oder Restaustenit in einer ferritischen Matrix enthält. Da ein solches Mehrphasengefüge in dem erfindungsgemäßen Stahlflachprodukt ausgeschlossen werden soll und weil die Stahlflachprodukte mit einem mehrphasigen Gefüge eine hohe Anlassempfindlichkeit mit einer Erniedrigung der Zugfestigkeit nach einer Alterung von bis zu 50 MPa aufweisen, liegt die Absprungtemperatur bevorzugt bei weniger als 690°C, insbesondere zwischen 500°C und 650°C, besonders bevorzugt zwischen 550°C und 600°.

Bei Verwendung einer Wasserkühlung, insbesondere einem Abschrecken des Stahlbands in einem Wassertank, können an der Oberfläche des Stahlbands aufgrund einer (Eisen-) Oxidschicht Probleme mit der Korrosionsbeständigkeit entstehen. Zur Vermeidung von Korrosionsproblemen ist eine maximale Oxidbelegung der Oberfläche des Stahlflachprodukts von 300 C/m², bevorzugt von weniger als 100 C/m², anzustreben. Um dies zu erreichen, wird bevorzugt in dem erfindungsgemäßen Verfahren eine Konditionierung des Abschreckwassers vorgenommen, das zur Wasserabschreckung beim sekundären Abkühlen verwendet wird. Insbesondere wird hierfür der Gehalt des im Abschreckwasser gelösten Sauerstoffs reduziert. Dazu kann bspw. eine Druckentgasung des Abschreckwassers, bspw. durch ein Eingasen von Inertgas (wie N2 und/oder HNx) erfolgen.

Weiterhin können auch der Sauerstoffgehalt in der Ofenatmosphäre des Durchlaufglühofens minimiert und die Wassertemperatur des Abschreckwassers auf 20°C oder weniger reduziert werden, um die Oxidbelegung an der Oberfläche des Stahlbands zu minimieren. Wenn das Abschreckwasser durch eine Reduzierung des Gehalts an gelöstem Sauerstoff konditioniert worden ist, kann eine niedrige Wassertemperatur des Abschreckwassers von 20°C oder weniger eingestellt werden. Die Konditionierung des Abschreckwassers, bspw. mit inertem Gas (N2, HNx), ermöglicht eine gezielte Einstellung der Konzentration des gelösten Sauerstoffs im Abschreckmedium, nahezu unabhängig von der Temperatur. Damit kann auch bei unterschiedlichen Wassertemperaturen eine vorgegebene, konstante Konzentration des gelösten Sauerstoffs eingestellt werden. Eine erhöhte Wassertemperatur führt nämlich zu einem dickeren und damit stabileren und längeren Dampffilm zwischen der Bandoberfläche und dem Kühlwasser. Der stabilere und damit länger vorhandene Dampffilm erhöht die Reaktionszeit der Drei-Phasen-Reaktion (Wasser, Dampf, Stahl) und damit die auf der Bandoberfläche messbare Oxidbelastung, weil die Oxidation der Bandoberfläche im Bereich der stabilen Filmverdampfung sattfindet, wo ein stabiler Dampffilm vorliegt, in dem eine Drei-Phasen-Reaktion erfolgt. Der im Kühlwasser gelöste Sauerstoff tritt aufgrund der durch das Stahlband bein sekundären Kühlen verursachten (lokalen) Temperaturerhöhung in den Dampffilm über und steht dort dann zur Oxidation der Bandoberfläche bereit und erhöht die Oxidbelegung. Deshalb werden zur Vermeidung einer hohen Oxidbelegung beim sekundären Kühlen bevorzugt niedrigere Wassertemperaturen für das Kühlwasser von 20°C oder weniger, insbesondere im Bereich von 15°C bis 20°C eingesetzt. Dadurch können Oxidbelegungen auf der Oberfläche des Stahlbands von weniger als 300 C/m² erzielt werden.

In dem erfindungsgemäßen Verfahren kann das rekristallisierend geglühte Stahlband nach dem Abkühlen mit einem Dressiergrad von 0,2 % bis 5 % dressiert oder sekundär mit einem Nachwalzgrad von mehr als 5 % bis 45 % kalt nachgewalzt werden. Dabei liegt die Streckgrenze beim Dressieren ("single reduced", SR) im Bereich von 300 MPa bis 500 MPa und beim sekundären Nachwalzen ("double reduced", DR) im Bereich zwischen 430 MPa und 700 MPa. Beim Dressieren oder Nachwalzen erfolgt eine weitere Verbesserung der Planheit, insbesondere über die Breite des Stahlbands.

Nach dem sekundären Kaltwalzen (Nachwalzen) oder Dressieren kann das erfindungsgemäße Stahlflachprodukt mit Korrosionsschutzschichten beschichtet werden, bspw. mit einer Zinnschicht durch elektrolytische Verzinnung (zur Herstellung von Weißblech) und/oder einer Chrom-/Chromoxid-Beschichtung durch elektrolytische Verchromung (zur Herstellung von spezialverchromtem Stahlblech, "electrolytic chromium coated steel": ECCS). Ergänzend oder alternativ dazu können auch bevorzugt chromfreie Passivierungsschichten sowie organische Auflagen, wie z.B. Polymerschichten, insbesondere in Form eines Lacks oder einer Polymerfolie, auf die Oberfläche appliziert werden.

Diese und weitere Merkmale sowie Vorteile der erfindungsgemäßen Stahlflachprodukte und des Verfahrens zu deren Herstellung ergeben sich aus den nachfolgend unter Bezugnahme auf die Zeichnungen beschriebenen Ausführungsformen und Beispielen.

Dabei zeigen:

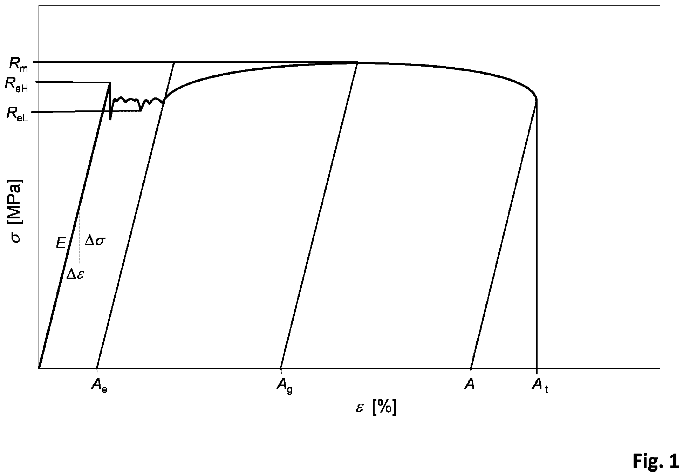

- **Fig. 1:**: typischer Verlauf eines Spannungs-Dehnungs-Diagramms aus einem Zugversuch an einem gealterten Stahlflachprodukt gemäß der Erfindung, wobei ε die Dehnung und σ die Spannung ist und ReL die untere Streckgrenze, ReH die obere Streckgrenze und Rm die Zugfestigkeit darstellt;

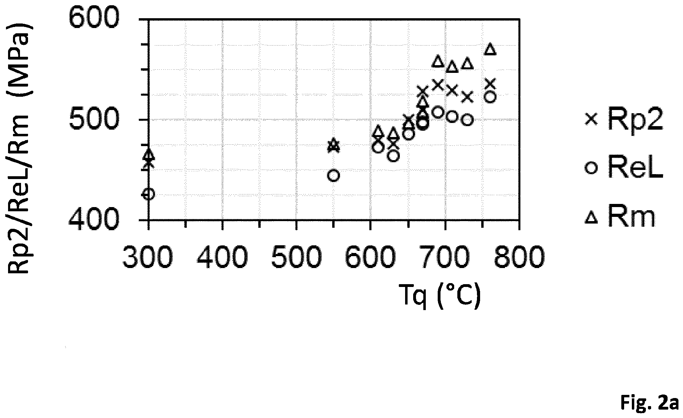

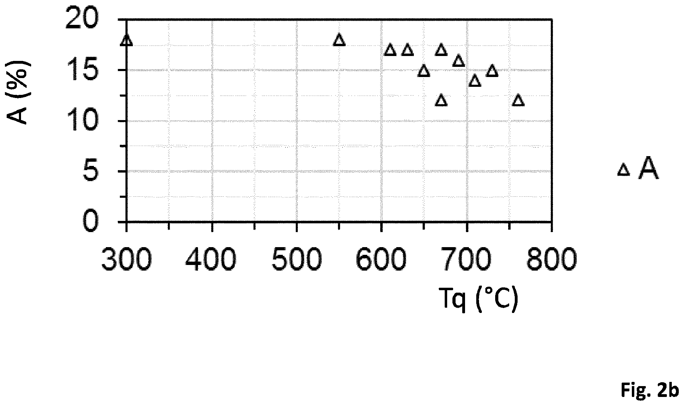

- **Fig. 2:**: graphische Darstellung der Festigkeit und der Bruchdehnung von Stahlflachprodukten in Abhängigkeit der Absprungtemperatur (Tq) des erfindungsgemäßen Verfahrens, wobei Figur 2a den Einfluss der Absprungtemperatur Tq auf die Festigkeit (Rp2, ReL, ReH und Rm) und Figur 2b den Einfluss der Absprungtemperatur Tq auf die Bruchdehnung A zeigt;

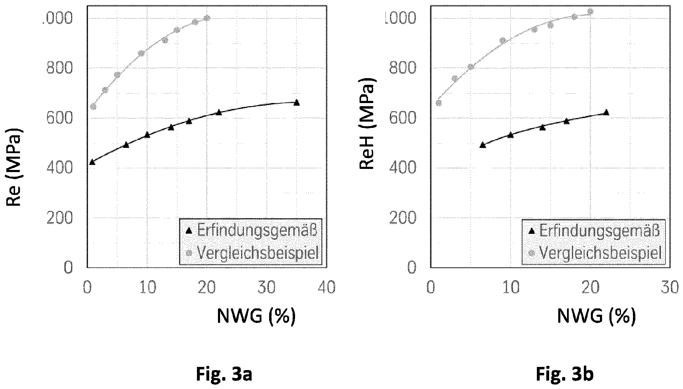

- **Fig. 3:**: graphische Darstellung der Festigkeit und der Streckgrenze von Stahlflachprodukten in Abhängigkeit des Nachwalzgrads beim sekundären Kaltwalzen bzw. Dressieren, wobei Figur 3a den Einfluss des Nachwalzgrads (NWG) auf die Zugfestigkeit (Rm) und Figur 3b den Einfluss des Nachwalzgrads (NWG) auf die obere Streckgrenze (ReH) zeigt;

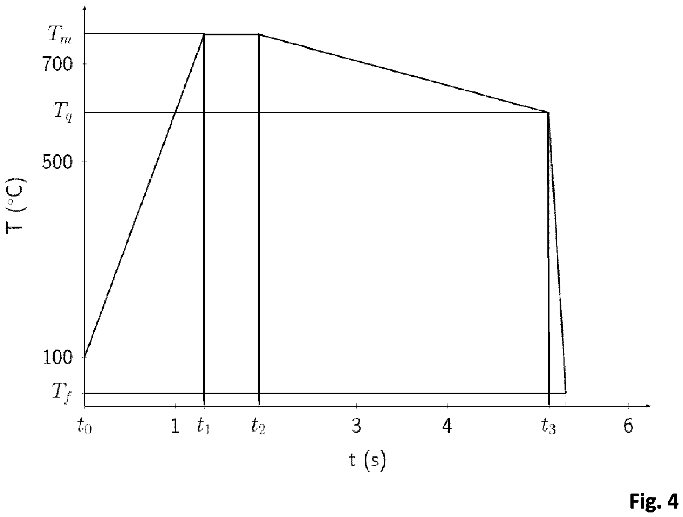

- **Fig. 4:**: graphische Darstellung eines typischen Glühzyklus, der in dem erfindungsgemäßen Verfahren durchgeführt wird, als Temperatur-Zeit-Diagramm.

Für die Herstellung erfindungsgemäßer Stahlflachprodukte wird aus einer Stahlschmelze mit einem niedrigen Kohlenstoffgehalt ("low carbon steel" LC) eine Bramme gegossen und zu einem Warmband warmgewalzt. Im Folgenden werden die Bestandteile des Stahls, aus dem erfindungsgemäße Stahlflachprodukte hergestellt werden können, im Einzelnen erläutert:

### Zusammensetzung des Stahls:

### • Kohlenstoff, C: mindestens 0,01 % und höchstens 0,1 %, bevorzugt weniger als 0,085 %:

Kohlenstoff wirkt härte- bzw. festigkeitssteigernd. Da mit der Erfindung ein kaltgewalztes Stahlflachprodukt für Verpackungen mit einer mittleren Festigkeit, bspw. mit einer Streckgrenze (ReL) im Bereich von 300 MPa bis 700 MPa angestrebt wird, enthält der Stahl mindestens 0,01 Gew.% Kohlenstoff um die gewünschte Festigkeit auch bei geringen Nachwalz- oder Dressiergraden von weniger als 5 % zu erzielen. Um die Walzbarkeit des Stahlflachprodukts beim primären Kaltwalzen und ggf. in einem zweiten Kaltwalzschritt (Nachwalzen oder Dressieren) zu gewährleisten und die Bruchdehnung nicht zu senken, sollte der Kohlenstoffgehalt nicht zu hoch sein. Mit zunehmendem Kohlenstoffgehalt entsteht ferner während der Herstellung und der Verarbeitung des Stahlflachprodukts eine ausgeprägte Anisotropie in Form einer Zeiligkeit, da der Kohlenstoff aufgrund der niedrigen Löslichkeit im Ferritgitter des Stahls maßgeblich in Form von Zementit vorliegt. Darüber hinaus verschlechtert sich mit zunehmendem Kohlenstoffgehalt die Oberflächenqualität und die Gefahr von Brammenrissen steigt mit Annäherung an den peritektischen Punkt. Dies kann bei der thermischen Behandlung des kaltgewalzten Stahlflachprodukts zu Planheitsdefekten führen. Deshalb ist eine Begrenzung des Kohlenstoffgehalts auf maximal 0,1 Gew. % bevorzugt, um die Bildung von Brammenrissen und daraus resultierende Planheitsdefekte zu vermeiden. Zur Erzielung einer guten Planheit und isotroper Materialeigenschaften des kaltgewalzten Stahlblechs ist ein Gewichtsanteil des Kohlenstoffs von weniger als 0,085 % besonders bevorzugt.

### • Mangan, Mn: höchstens 0,6 %, bevorzugt mehr als 0,17 %;

Mangan wirkt ebenfalls härte- bzw. festigkeitssteigernd. Außerdem verbessert Mangan die Schweißbarkeit und den Verschleißwiderstand von Stahl. Ferner wird durch Zugabe von Mangan die Rotbruch-Neigung beim Warmwalzen gemindert, indem Schwefel zu weniger schädlichem MnS abgebunden wird. Weiterhin führt Mangan zu einer Kornfeinung und durch Mangan kann die Löslichkeit von Stickstoff im Eisengitter erhöht und eine Diffusion von Kohlenstoff an die Oberfläche der Bramme verhindert werden. Daher ist ein Mangangehalt von wenigstens 0,17 Gew.% zu bevorzugen. Zur Erzielung der angestrebten Festigkeiten ist ein Mangangehalt von mehr als 0,2 Gew.%, insbesondere von 0,30 Gew.% oder mehr zu bevorzugen. Wenn der Mangangehalt jedoch zu hoch wird, geht dies zu Lasten der Korrosionsbeständigkeit des Stahls und die Lebensmittelverträglichkeit ist nicht mehr gewährleistet. Außerdem wird bei zu hohen Mangangehalten die Festigkeit des Warmbands zu hoch, was dazu führt, dass das Warmband nicht mehr kaltwalzbar ist. Daher ist die Obergrenze für den Mangangehalt bei 0,6 Gew.%.

### • Phosphor, P: weniger als 0,1 %

Phosphor ist ein unerwünschtes Begleitelement in Stählen. Ein hoher Phosphorgehalt führt insbesondere zu einer Versprödung des Stahls und verschlechtert daher die Umformfähigkeit von Stahlflachprodukten, weshalb die Obergrenze für den Phosphorgehalt bei 0,1 Gew. % liegt.

### • Schwefel, S: weniger als 0,03 %, bevorzugt mehr als 0,001 %

Schwefel ist ein unerwünschtes Begleitelement, das die Dehnbarkeit und die Korrosionsbeständigkeit verschlechtert. Daher sollte nicht mehr als 0,03 Gew.% Schwefel im Stahl enthalten sein. Andererseits müssen für eine Entschwefelung von Stahl aufwändige und kostenintensive Maßnahmen ergriffen werden, weshalb aus wirtschaftlichen Gesichtspunkten ein Schwefelgehalt von weniger als 0,001 Gew.% nicht mehr vertretbar ist. Der Schwefelgehalt liegt daher im Bereich von 0,001 Gew.% bis 0,03 Gew.%, besonders bevorzugt zwischen 0,005 Gew.% und 0,01 Gew.%.

### • Aluminium, Al: weniger als 0,1 %, bevorzugt mehr als 0,002 %

Aluminium wird bei der Stahlherstellung als Desoxidationsmittel zur Stahlberuhigung benötigt. Aluminium erhöht weiterhin die Zunderbeständigkeit und die Umformfähigkeit. Deshalb liegt der Aluminiumgehalt bevorzugt bei mehr als 0,002 Gew.%. Allerdings bildet Aluminium mit Stickstoff Aluminiumnitride, welche nachteilig sind, da sie den Anteil des freien Stickstoffs reduzieren und dadurch die durch eine Mischkristallverfestigung mit Stickstoff erzielbare Festigkeit reduzieren. Außerdem können zu hohe Aluminiumkonzentrationen zu Oberflächendefekten in Form von Aluminiumclustern führen, welche zu Planheitsdefekten führen können. Deshalb wird Aluminium in einer Konzentration von weniger als 0,1 Gew.% eingesetzt.

### • Silizium, Si: weniger als 0,03 %;

Silizium erhöht im Stahl die Zunderbeständigkeit und ist ein Mischkristallhärter. Bei der Stahlherstellung dient Si als Desoxidationsmittel. Ein weiterer positiver Einfluss von Silizium auf Stahl ist, dass es die Zugfestigkeit und die Streckgrenze erhöht. Daher ist ein Siliziumgehalt von 0,003 Gew.% oder mehr zu bevorzugen, um die gewünschten Festigkeiten zu erzielen. Wenn der Siliziumgehalt jedoch zu hoch wird und insbesondere 0,03 Gew.% übersteigt, kann die Korrosionsbeständigkeit des Stahls verschlechtert werden und Oberflächenbehandlungen, insbesondere durch elektrolytische Beschichtungen, können erschwert werden.

### • Stickstoff, N: weniger als 0,07 % und bevorzugt mehr als 0,001 %

Stickstoff wirkt in Stahllegierungen als Mischkristallverfestiger härte- und festigkeitssteigernd und wirkt sich positiv auf die Umformfähigkeit aus, was sich bspw. in hohen Werten der Erichsentiefung darstellt. Daher ist ein Stickstoffanteil von mehr als 0,001 Gew.% zu bevorzugen, um die gewünschte Festigkeit und Umformfähigkeit zu erzielen. Allerdings führt ein zu hoher Stickstoffgehalt in der Stahlschmelze dazu, dass das aus der Stahlschmelze hergestellte Warmband schwieriger kaltwalzbar ist. Dies macht sich insbesondere bei einem Stickstoffanteil von mehr als 0,016 Gew.% bemerkbar. Weiterhin erhöht ein hoher Stickstoffgehalt in der Stahlschmelze die Gefahr von Defekten im Warmband, da bei sehr hohen Stickstoffkonzentrationen die Warmumformfähigkeit geringer wird. Defekte im Warmband gehen zu Lasten der Planheit des kaltgewalzten Stahlblechs. Daher liegt die Obergrenze des Stickstoffanteils zur Erzielung einer guten Planheit bei 0,07 Gew.% und bevorzugt bei höchstens 0,016 Gew.%.

### • optional: Nitridbildner, insbesondere Niob, Titan, Bor, Molybdän, Chrom:

Nitridbildende Elemente wie Aluminium, Titan, Niob, Bor, Molybdän und Chrom sind im Stahl der erfindungsgemäßen Stahlflachprodukte von Nachteil, weil sie durch Nitridbildung den Anteil des freien Stickstoffs reduzieren. Außerdem sind diese Elemente teuer und erhöhen daher die Herstellkosten. Andererseits wirken bspw. die Elemente Niob, Titan und Bor über eine Kornfeinung als Mikrolegierungsbestandteile festigkeitssteigernd, ohne die Zähigkeit herabzusetzen. Deshalb können die genannten Nitridbildner vorteilhaft in gewissen Grenzen als Legierungsbestandteile der Stahlschmelze hinzugegeben werden. Der Stahl kann daher (optional) bezogen auf das Gewicht folgende Legierungsbestandteile enthalten:
- Titan, Ti: weniger als 0,01 %;
- Bor, B: weniger als 0,005 %,
- Niob, Nb: weniger als 0,01 %,
- Chrom, Cr: bevorzugt mehr als 0,01 % um den Einsatz von Schrott bei der Herstellung der Stahlschmelze zu ermöglichen und die Diffusion von Kohlenstoff an der Oberfläche der Bramme zu erschweren, aber zur Vermeidung von Karbiden und Nitriden höchstens 0,1 %,
- Molybdän, Mo: weniger als 0,02 %, um eine zu starke Erhöhung der Rekristallisationstemperatur zu vermeiden;

### Weitere optionale Komponenten:

Neben dem Reststoff Eisen (Fe) und unvermeidlichen Verunreinigungen kann die Stahlschmelze noch weitere optionale Bestanteile enthalten, wie z.B.
- optional Kupfer, Cu: zweckmäßig mehr als 0,002 %, um den Einsatz von Schrott bei der Herstellung der Stahlschmelze zu ermöglichen, aber weniger als 0,1 % um die Lebensmittelverträglichkeit zu gewährleisten;
- optional Nickel, Ni: zweckmäßig mehr als 0,01 %, um den Einsatz von Schrott bei der Herstellung der Stahlschmelze zu ermöglichen und die Zähigkeit zu verbessern, aber weniger als 0,1 % um die Lebensmittelverträglichkeit zu gewährleisten;
- optional Zinn, Sn: bevorzugt weniger als 0,03 %;

### Herstellungsverfahren des Stahlflachprodukts:

Mit der beschriebenen Zusammensetzung des Stahls wird zur Herstellung erfindungsgemäßer Stahlflachprodukte eine Stahlschmelze erzeugt, welche zunächst stranggegossen und nach Abkühlung in Brammen zerteilt wird. Die Brammen werden anschließend wieder auf Vorwärmtemperaturen von mehr als 1100°C, insbesondere von 1200°C erwärmt und zur Erzeugung eines Warmbands mit einer Dicke im Bereich von 1 bis 4 mm warmgewalzt.

Die Endwalztemperatur beim Warmwalzen liegt bevorzugt oberhalb der Ar3-Temperatur, um austenitisch zu bleiben, und liegt insbesondere zwischen 800°C und 920°C.

Das Warmband wird bei einer vorgegebenen und zweckmäßig konstanten Aufwickeltemperatur (Haspeltemperatur, HT) zu einer Rolle (Coil) aufgewickelt. Die Aufwickeltemperatur liegt dabei bevorzugt unterhalb Ar1, um im ferritischen Gebiet zu bleiben, bevorzugt im Bereich von 500°C bis 750°C, und besonders bevorzugt bei weniger als 640°C, um eine homogene Verteilung von Karbiden und eine möglichst feine Zementitausscheidung zu erzielen.

Zur Herstellung eines Verpackungsstahls in Form eines dünnen Stahlflachprodukts im Dickenbereich von 0,49 mm oder weniger (Feinstblechdicken) wird das Warmband kaltgewalzt, wobei zweckmäßig eine Dickenreduktion (Reduktionsgrad bzw. Kaltwalzgrad) von mindestens 80% und bevorzugt im Bereich von 85 % bis 98 % erfolgt. Die Breite des Stahlbands beträgt dabei bevorzugt 1200 mm oder weniger und liegt besonders bevorzugt im Bereich von 700 mm bis 1100 mm. Zur Wiederherstellung des beim Kaltwalzen zerstörten Kristallgefüges des Stahls wird das kaltgewalzte Stahlband anschließend rekristallisierend in einem Glühofen bei einer Glühtemperatur oberhalb der Rekristallisationstemperatur geglüht. Dies erfolgt bspw. durch Durchleiten des in Form eines kaltgewalzten Stahlbands vorliegenden Stahlflachprodukts durch einen Durchlaufglühofen, in dem das Stahlband induktiv auf die Glühtemperatur erhitzt und über eine vorgegebene Haltezeit auf der Glühtemperatur gehalten wird. Die Heizrate, mit der das kaltgewalzte Stahlband beim Glühen in dem Durchlaufglühofen induktiv auf die Glühtemperatur erhitzt wird, liegt bei mehr als 100 K/s und bevorzugt bei mehr als 300 K/s, insbesondere zwischen 400 K/s bis 600 K/s.

Die Glühtemperatur liegt dabei bevorzugt zwischen 725°C und 769°C und die Haltezeit beträgt bevorzugt weniger als 1 Sekunde, insbesondere zwischen 0,3 und 0,9 Sekunden, besonders bevorzugt weniger als 0,7 Sekunden und insbesondere zwischen 0,50 und 0,60 Sekunden.

Nach Ablauf der Haltezeit wird das rekristallisierend geglühte Stahlband in einem primären Kühlschritt auf eine Absprungtemperatur (Tq), die unterhalb der Rekristallisationstemperatur liegt und bevorzugt kleiner als 715°C, insbesondere kleiner als 600°C ist, mit einer primären Kühlrate von weniger als 1000 K/s, bevorzugt von weniger als 400 K/s und beispielsweise im Bereich von 100 K/s bis 400 K/s gekühlt und unmittelbar danach erfolgt ein sekundäres Abkühlen des Stahlbands auf eine Temperatur von weniger als 80°C mit einer sekundären Kühlrate von mehr als 1000 K/s, bevorzugt mehr als 1500 K/s, und bspw. im Bereich von 1600 K/s bis 3000 K/s. Das primäre Abkühlen erfolgt dabei durch eine Gaskühlung, insbesondere einen Gasstrahl, und das sekundäre Abkühlen durch eine Wasserkühlung, insbesondere durch Eintauchen des Stahlbands in ein Wasserbad mit einer Wassertemperatur von 80°C oder weniger.

Ein typischer Glühzyklus für das Glühen und Abkühlen des Stahlbands ist in Figur 4 gezeigt. Dabei bezeichnet Tₘ die (maximale) Glühtemperatur, auf die das Stahlband im Glühofen erhitzt wird, T_{q} die Absprungtemperatur, bei der das sekundäre Abkühlen eingeleitet wird und T_{f} die Wassertemperatur der Wasserkühlung, mit der das sekundäre Abkühlen erfolgt. Das Erhitzen des Stahlbands auf die Glühtemperatur erfolgt dabei induktiv innerhalb einer kurzen Aufheizzeit t₁, welche bevorzugt kleiner als 2 Sekunden ist und bspw. zwischen 1,0 und 2,0 Sekunden liegt. Das Stahlband wird über eine Haltezeit t_{H} = t₂ - t₁ bis zum Zeitpunkt t₂ auf der Glühtemperatur gehalten und danach abgekühlt. Das Abkühlen erfolgt dabei in zwei Schritten, nämlich dem primären Abkühlen mit einer Gaskühlung (bis zur Zeit t₃), bei dem das Stahlband mit niedriger Kühlrate auf die Absprungtemperatur T_{q} gekühlt wird, und dem sich ab dem Zeitpunkt t₃ anschließenden sekundären Abkühlen, bei dem das Stahlband mit der Wasserkühlung bei sehr hoher Kühlrate auf die Wassertemperatur Tf abgekühlt wird.

Nachfolgend werden Ausführungsbeispiele der Erfindung und Vergleichsbeispiele erläutert.

### Ausführungsbeispiele der Erfindung:

Aus Stahlschmelzen mit der in **Tabelle 1** aufgeführten Legierungskompositionen wurden durch Warmwalzen und nachfolgendem Kaltwalzen Stahlflachprodukte (Stahlbleche) hergestellt.

Die kaltgewalzten Stahlflachprodukte wurden anschließend in einem Durchlaufglühofen rekristallisierend geglüht, indem die Stahlflachprodukte induktiv mit einer hohen Heizrate auf eine Glühtemperatur oberhalb der Rekristallisationstemperatur erwärmt und während einer Haltezeit auf der Glühtemperatur gehalten wurden. Nach Ablauf der Haltezeit wurden die Stahlbänder zweistufig abgekühlt, wobei ein primäres Abkühlen mittels einer Gaskühlung bei geringer Kühlrate auf eine Absprungtemperatur Tq und danach ein sekundäres Abkühlen mit einer schnellen Abschreckung in einem Wasserbad mit einer vorgegebenen Wassertemperatur Tf erfolgte. Nach dem Abkühlen wurden die Stahlbänder mit einem Nachwalzgrad von 5 % bis 45 % kalt nachgewalzt oder mit einem Dressiergrad von 0,2 % bis maximal 5 % dressiert. Die Verfahrensparameter beim Glühen und Abkühlen und dem anschließenden sekundären Kaltwalzen oder Dressieren sind in **Tabelle 2** angeführt und die dabei erzielten Materialparameter sind **Tabelle 3** zu entnehmen. Dabei ist:
- Tm die Glühtemperatur (in °C),
- t_{H} die Haltezeit (in s),
- dT/dt_K1 die Kühlrate beim primären Kühlen (in K/s),
- Tq die Absprungtemperatur (in °C) bei Beendigung des primären Kühlens,
- Tf die Wassertemperatur (in °C) beim sekundären Kühlens,
- D die Dicke des Stahlblechs nach dem Nachwalzen bzw. Dressieren (in mm),
- NWG der Nachwalzgrad beim sekundären Kaltwalzen (in %) bzw. der Dressiergrad (in %) beim Dressieren,
- Rp0,2 oder Rp2 die 0,2%-Dehngrenze (in MPa) (in Walzrichtung),
- Rp0,5 oder Rp5 die 0,5%-Dehngrenze (in MPa) (in Walzrichtung),
- ReL die untere Streckgrenze (in MPa) (in Walzrichtung),
- ReH die obere Streckgrenze (in MPa) (in Walzrichtung),
- A die Bruchdehnung (in %) (in Walzrichtung),
- Rm die Zugfestigkeit (in MPa) (in Walzrichtung) und
- P die gemäß "ASTM A 1030/A1030M-11" gemessene Planheit (in U-Units).

### Vergleichsbeispiele:

Die Stahlbleche mit der Legierungskomposition gemäß **Tabelle 1** wurden zu Vergleichszwecken in einem Durchlaufglühofen rekristallisierend geglüht, indem die Stahlflachprodukte induktiv mit einer Heizrate von mehr als 100 K/s auf eine Glühtemperatur oberhalb der Rekristallisationstemperatur erwärmt und während einer Haltezeit auf der Glühtemperatur gehalten und danach einstufig mittels einer Wasserkühlung bei einer Kühlrate von mehr als 1000 K/s abgekühlt wurden. Nach dem Abkühlen wurden die Stahlbänder kalt mit einem Nachwalzgrad von 5 % bis 45 % nachgewalzt oder mit einem Dressiergrad von 0,2 % bis maximal 5 % dressiert. Die Verfahrensparameter beim Glühen und Abkühlen und dem anschließenden sekundären Kaltwalzen oder Dressieren dieser Vergleichsbeispiele sind in **Tabelle 2** angegeben und die dabei erzielten Materialparameter sind **Tabelle 3** zu entnehmen.

Die Proben der erfindungsgemäßen Beispiele und der Vergleichsbeispiele wurden nach dem Dressieren oder dem sekundären Nachwalzen einer künstlichen Alterung unterzogen, indem die Proben über 20 Minuten auf eine Alterungstemperatur von ca. 200 bis 210 °C gehalten worden sind. An den gealterten Proben wurden zur Erfassung der mechanischen Kennwerte Zugversuche durchgeführt (gem. DIN EN 102020 und EN ISO 6892). Ein typischer Verlauf des Spannungs-Dehnungs-Diagramms einer gealterten Probe ist in Figur 1 gezeigt.

Bei dressierten Proben mit einem Nachwalzgrad < 5 % wird im gealterten Zustand R_{eL} als Streckgrenze angegeben. Bei nachgewalzten Proben mit einem Nachwalzgrad ≥ 5 % wird im gealterten Zustand R_{eH} oder die 0,5%-Dehngrenze (R_{p0,5}) als Streckgrenze angegeben, da sich R_{eL} bei diesen Proben nicht immer bestimmen lässt. Generell gilt für die Bestimmung der Streckgrenze: ist ReL ermittelbar, so ist dieser Parameter generell zu verwenden, ist dies nicht der Fall, so wird die Verwendung der Rp0,2%-Dehngrenze, so lange ein Plateau im Bereich der Lüdersdehnung ersichtlich ist, als passender Parameter empfohlen, in allen anderen Fällen ist das Maximum, ReH und/oder Rm zu verwenden.

Wie Tabelle 3 zu entnehmen ist, hat sich bei den Vergleichsbeispielen (Beispiele 1, 6 bis 10, 15 bis 17 sowie 20 bis 22) eine mehrphasige Gefügestruktur mit einer Martensitphase ausgebildet, weshalb diese Beispiele nicht als erfindungsgemäß zu qualifizieren sind. Dies ist durch die hohe Absprungtemperatur und die schnelle Abkühlung beim sekundären Kühlen zu erklären. Für die Verfahrensführung beim Kühlen der rekristallisierend geglühten Stahlbänder werden daher zur Vermeidung einer Martensitphase Absprungtemperaturen Tq unterhalb von 690°C bevorzugt. Bedingt durch die mehrphasige Gefügestruktur weisen diese Beispiele gegenüber den erfindungsgemäßen Beispielen eine höhere Streckgrenze und Festigkeit auf, die außerhalb der bevorzugten Bereiche von maximal 500 MPa für die Streckgrenze (bei einfach kaltgewalzten Stahlbändern mit einem Dressiergrad von weniger als 5 %) liegen. Weiterhin weisen die Beispiele 6 bis 10, 12, 15 bis 17 sowie 20 bis 22 Planheitsdefekte auf, was sich durch hohe Planheitswerte von mehr als 5 I-Units darstellt, weshalb diese Beispiele nicht als erfindungsgemäß zu qualifizieren sind. Im Beispiel 12 hat sich zwar keine Martensitphase ausgebildet. Allerdings weist diese Probe wegen einer im Vergleich zu den erfindungsgemäßen Beispielen 2 bis 5 und 11 (welche aus demselben Stahl Nr. 6 sind) höheren Wassertemperatur beim sekundären Kühlen Planheitsdefekte auf, die sich durch Planheitswerte von 17,3 I-Units wiederspiegeln, die außerhalb des erfindungsgemäßen Bereichs liegen.

Um den Einfluss der Absprungtemperatur Tq auf die Festigkeit und die Bruchdehnung zu ermitteln, wurden an gealterten Proben gem. Tabelle 1 Zugversuche mit verschiedenen Absprungtemperaturen Tq durchgeführt. In Figur 2 sind die Ergebnisse dieser Versuche graphisch dargestellt, wobei Figur 2a den Einfluss der Absprungtemperatur Tq auf die Festigkeit (Rp2, ReL, ReH und Rm) und Figur 2b den Einfluss der Absprungtemperatur Tq auf die Bruchdehnung A zeigt. Aus Figur 2a ist dabei ein Anstieg der Festigkeit bei Absprungtemperaturen Tq oberhalb von ca. 650°C zu beobachten, wohingegen die Absprungtemperatur Tq nur geringen Einfluss auf die Bruchdehnung hat, wie aus Figur 2b ersichtlich.

Um die Änderung der Festigkeit beim Nachwalzen (sekundäres Kaltwalzen bzw. Dressieren) zu ermitteln, wurden an erfindungsgemäßen Proben und an Proben von Vergleichsbeispielen Versuche mit verschiedenen Nachwalzgraden (NWG) durchgeführt. In Figur 3 sind die Ergebnisse dieser Versuche graphisch dargestellt, wobei Figur 3a den Einfluss des Nachwalzgrads (NWG) auf die Zugfestigkeit (Rm) und Figur 3b den Einfluss des Nachwalzgrads (NWG) auf die auf die obere Streckgrenze (ReH) zeigt. Aus den Figuren 3a und 3b ist dabei ersichtlich, dass der Nachwalzgrad bei den erfindungsgemäßen Proben eine geringere Erhöhung der Festigkeit bewirkt als bei den Vergleichsbeispielen. Die erfindungsgemäßen Stahlflachprodukte können daher auch bei doppelt reduzierten Proben mit Nachwalzgraden von 5 % bis 45 % innerhalb des moderaten Festigkeitsbereich mit Streckgrenzen zwischen 430 MPa und 700 MPa gehalten werden. Dies ermöglicht die Ausbildung von Stahlflachprodukten mit einer moderaten Festigkeit und geringeren Dicken von 0,21 mm oder weniger, durch zweifaches Kaltwalzen. Bei Dressiergraden von maximal 5 % weisen die Stahlflachprodukte der Erfindung eine Streckgrenze im Bereich von 300 MPa bis 500 MPa auf.

**Tabelle 1**

| **Stahl** | **C** | **Mn** | **P** | **Si** | **Al** | **Cu** | **Cr** | **Nb** | **Ti** | **S** | **Sn** | **B** | **Mo** | **Ni** | **N** |
|---|---|---|---|---|---|---|---|---|---|---|---|---|---|---|---|
| | [Gew.-%] | | | | | | | | | | | | | | |
| 1 | 0,021 | 0,21 | 0,010 | 0,005 | 0,022 | 0,014 | 0,021 | < 0,0010 | < 0,0010 | 0,010 | 0,002 | 0,002 | 0,004 | 0,020 | 0,0025 |
| 2 | 0,025 | 0,25 | 0,012 | 0,020 | 0,031 | 0,017 | 0,030 | < 0,0010 | < 0,0010 | 0,004 | 0,003 | - | 0,003 | 0,015 | 0,0054 |
| 3 | 0,037 | 0,23 | 0,011 | 0,020 | 0,032 | 0,008 | 0,022 | < 0,0010 | < 0,0010 | 0,005 | 0,002 | - | 0,001 | 0,016 | 0,0043 |
| 4 | 0,058 | 0,29 | 0,009 | 0,010 | 0,031 | 0,011 | 0,046 | < 0,0010 | < 0,0010 | 0,003 | 0,004 | - | 0,004 | 0,020 | 0,0059 |
| 5 | 0,069 | 0,26 | 0,011 | 0,016 | 0,061 | 0,010 | 0,054 | < 0,0010 | < 0,0010 | 0,009 | 0,006 | | 0,002 | 0,020 | 0,0040 |
| 6 | 0,067 | 0,29 | 0,010 | 0,005 | 0,016 | 0,009 | 0,020 | < 0,0010 | < 0,0010 | 0,010 | 0,002 | | 0,001 | 0,018 | 0,0111 |

**Tabelle 2**

| Beispiel | | Stahl | D | NWG | Tm | tH | dT/dt_K1 | Tq | Tf |
|---|---|---|---|---|---|---|---|---|---|
| | | [Tab. 1] | [mm] | [%] | [°C] | [s] | [K/s] | [°C] | [°C] |
| 1 | Vergleichsbeispiel | 6 | 0,205 | 1,0 | 769 | 1,4 | 50 | 695 | 25 |
| 2 | erfindungsgemäß | 6 | 0,205 | 8,0 | 769 | 1,4 | 50 | 685 | 25 |
| 3 | erfindungsgemäß | 6 | 0,205 | 1,0 | 769 | 1,4 | 50 | 650 | 25 |
| 4 | erfindungsgemäß | 6 | 0,205 | 1,0 | 769 | 1,4 | 50 | 600 | 25 |
| 5 | erfindungsgemäß | 6 | 0,205 | 1,0 | 769 | 1,4 | 50 | 550 | 25 |
| 6 | Vergleichsbeispiel | 6 | 0,205 | 1,0 | 769 | 1,4 | 50 | 735 | 25 |
| 7 | Vergleichsbeispiel | 6 | 0,205 | 1,0 | 769 | 1,4 | 50 | 745 | 25 |
| 8 | Vergleichsbeispiel | 6 | 0,205 | 1,0 | 769 | 1,4 | 50 | 735 | 17 |
| 9 | Vergleichsbeispiel | 6 | 0,205 | 1,0 | 769 | 1,4 | 50 | 735 | 35 |
| 10 | Vergleichsbeispiel | 6 | 0,205 | 1,0 | 769 | 1,4 | 50 | 735 | 55 |
| 11 | erfindungsgemäß | 6 | 0,205 | 8,0 | 769 | 1,4 | 50 | 685 | 17 |
| 12 | Vergleichsbeispiel | 6 | 0,205 | 8,0 | 769 | 1,4 | 50 | 685 | 35 |
| 13 | erfindungsgemäß | 3 | 0,185 | 1,0 | 769 | 1,4 | 50 | 650 | 25 |
| 14 | erfindungsgemäß | 3 | 0,185 | 1,0 | 769 | 1,4 | 50 | 600 | 25 |
| 15 | Vergleichsbeispiel | 3 | 0,185 | 1,0 | 769 | 1,4 | 50 | 735 | 25 |
| 16 | Vergleichsbeispiel | 3 | 0,185 | 1,0 | 769 | 1,4 | 50 | 735 | 17 |
| 17 | Vergleichsbeispiel | 3 | 0,185 | 1,0 | 769 | 1,4 | 50 | 735 | 55 |
| 18 | erfindungsgemäß | 1 | 0,185 | 1,0 | 769 | 1,4 | 50 | 650 | 25 |
| 19 | erfindungsgemäß | 1 | 0,210 | 1,0 | 769 | 1,4 | 50 | 600 | 25 |
| 20 | Vergleichsbeispiel | 1 | 0,210 | 1,0 | 769 | 1,4 | 50 | 735 | 25 |
| 21 | Vergleichsbeispiel | 1 | 0,210 | 1,0 | 769 | 1,4 | 50 | 735 | 17 |
| 22 | Vergleichsbeispiel | 1 | 0,210 | 1,0 | 769 | 1,4 | 50 | 735 | 55 |
| 23 | erfindungsgemäß | 2 | 0,190 | 1,0 | 769 | 1,4 | 50 | 650 | 25 |
| 24 | erfindungsgemäß | 2 | 0,190 | 1,0 | 769 | 1,4 | 50 | 600 | 25 |
| 25 | Vergleichsbeispiel | 2 | 0,190 | 1,0 | 769 | 1,4 | 50 | 735 | 25 |
| 26 | Vergleichsbeispiel | 2 | 0,190 | 1,0 | 769 | 1,4 | 50 | 735 | 17 |
| 27 | Vergleichsbeispiel | 2 | 0,190 | 1,0 | 769 | 1,4 | 50 | 735 | 55 |
| 28 | erfindungsgemäß | 4 | 0,185 | 1,0 | 769 | 1,4 | 50 | 650 | 25 |
| 29 | erfindungsgemäß | 4 | 0,185 | 1,0 | 769 | 1,4 | 50 | 600 | 25 |
| 30 | Vergleichsbeispiel | 4 | 0,185 | 1,0 | 769 | 1,4 | 50 | 735 | 25 |
| 31 | Vergleichsbeispiel | 4 | 0,185 | 1,0 | 769 | 1,4 | 50 | 735 | 17 |
| 32 | Vergleichsbeispiel | 4 | 0,185 | 1,0 | 769 | 1,4 | 50 | 735 | 55 |
| 33 | erfindungsgemäß | 5 | 0,200 | 1,0 | 769 | 1,4 | 50 | 650 | 25 |
| 34 | erfindungsgemäß | 5 | 0,200 | 1,0 | 769 | 1,4 | 50 | 600 | 25 |
| 35 | Vergleichsbeispiel | 5 | 0,200 | 1,0 | 769 | 1,4 | 50 | 735 | 25 |
| 36 | Vergleichsbeispiel | 5 | 0,200 | 1,0 | 769 | 1,4 | 50 | 735 | 17 |
| 37 | Vergleichsbeispiel | 5 | 0,200 | 1,0 | 769 | 1,4 | 50 | 735 | 55 |

**Tabelle 3**

| Beispiel | | Stahl | Rp0,2 | ReL | ReH | A | Rm | Gefüge (Martensit) | Planheit |
|---|---|---|---|---|---|---|---|---|---|
| | | [Tab. 1] | in Walzrichtung | | | | | [ja/nein] | [I-Unit] |
| | | | [MPa] | [MPa] | [MPa] | [%] | [MPa] | | |
| 1 | Vergleichsbeispiel | 6 | 588 | 571 | 621 | 14 | 587 | ja | 1,5 |
| 2 | erfindungsgemäß | 6 | 564 | 545 | 592 | 16 | 552 | nein | 1,3 |
| 3 | erfindungsgemäß | 6 | 498 | 486 | 516 | 15 | 497 | nein | 1,2 |
| 4 | erfindungsgemäß | 6 | 479 | 473 | 487 | 17 | 489 | nein | 1,4 |
| 5 | erfindungsgemäß | 6 | 473 | 445 | 480 | 18 | 476 | nein | 0,9 |
| 6 | Vergleichsbeispiel | 6 | 599 | 581 | 630 | 13 | 598 | ja | 20,2 |
| 7 | Vergleichsbeispiel | 6 | 605 | 586 | 637 | 14 | 598 | ja | 36,1 |
| 8 | Vergleichsbeispiel | 6 | 598 | 578 | 631 | 13 | 596 | ja | 12,0 |
| 9 | Vergleichsbeispiel | 6 | 591 | 572 | 622 | 13 | 597 | ja | 36,5 |
| 10 | Vergleichsbeispiel | 6 | 490 | 475 | 502 | 16 | 473 | ja | 43,5 |
| 11 | erfindungsgemäß | 6 | 561 | 549 | 590 | 15 | 554 | nein | 1,2 |
| 12 | Vergleichsbeispiel | 6 | 558 | 542 | 583 | 16 | 550 | nein | 17,3 |
| 13 | erfindungsgemäß | 3 | 430 | 436 | 421 | 16 | 424 | nein | 1,7 |
| 14 | erfindungsgemäß | 3 | 402 | 397 | 406 | 16 | 405 | nein | 1,8 |
| 15 | Vergleichsbeispiel | 3 | 513 | 493 | 526 | 14 | 498 | ja | 19,6 |
| 16 | Vergleichsbeispiel | 3 | 521 | 501 | 533 | 16 | 506 | ja | 10,3 |
| 17 | Vergleichsbeispiel | 3 | 408 | 393 | 419 | 18 | 389 | ja | 40,1 |
| 18 | erfindungsgemäß | 1 | 363 | 366 | 366 | 16 | 359 | nein | 1,2 |
| 19 | erfindungsgemäß | 1 | 319 | 325 | 336 | 16 | 326 | nein | 1,4 |
| 20 | Vergleichsbeispiel | 1 | 428 | 408 | 438 | 15 | 411 | ja | 21,7 |
| 21 | Vergleichsbeispiel | 1 | 432 | 412 | 444 | 16 | 417 | ja | 11,4 |
| 22 | Vergleichsbeispiel | 1 | 334 | 319 | 348 | 28 | 317 | ja | 42,9 |
| 23 | erfindungsgemäß | 2 | 384 | 385 | 388 | 15 | 382 | nein | 1,3 |
| 24 | erfindungsgemäß | 2 | 336 | 346 | 358 | 16 | 346 | nein | 1,5 |
| 25 | Vergleichsbeispiel | 2 | 457 | 423 | 458 | 14 | 460 | ja | 20,0 |
| 26 | Vergleichsbeispiel | 2 | 462 | 442 | 472 | 13 | 446 | ja | 12,1 |
| 27 | Vergleichsbeispiel | 2 | 347 | 332 | 358 | 24 | 329 | ja | 42,8 |
| 28 | erfindungsgemäß | 4 | 450 | 458 | 443 | 15 | 444 | nein | 2,3 |
| 29 | erfindungsgemäß | 4 | 419 | 418 | 429 | 14 | 424 | nein | 2,2 |
| 30 | Vergleichsbeispiel | 4 | 559 | 539 | 568 | 13 | 542 | ja | 18,5 |
| 31 | Vergleichsbeispiel | 4 | 568 | 548 | 581 | 13 | 553 | ja | 9,7 |
| 32 | Vergleichsbeispiel | 4 | 429 | 414 | 437 | 20 | 410 | ja | 39,6 |
| 33 | erfindungsgemäß | 5 | 500 | 487 | 517 | 15 | 498 | nein | 1,5 |
| 34 | erfindungsgemäß | 5 | 480 | 474 | 488 | 17 | 490 | nein | 1,8 |
| 35 | Vergleichsbeispiel | 5 | 599 | 581 | 633 | 13 | 597 | ja | 17,2 |
| 36 | Vergleichsbeispiel | 5 | 600 | 557 | 613 | 16 | 582 | ja | 12,5 |
| 37 | Vergleichsbeispiel | 5 | 486 | 466 | 498 | 18 | 461 | ja | 45,1 |

## Patentansprüche

1. Kaltgewalztes Stahlflachprodukt für Verpackungen mit einer Dicke von weniger als 0,49 mm und folgender Zusammensetzung in Bezug auf das Gewicht:
- C: 0,01 - 0,1 %,
- Si: < 0,03 %,
- Mn: < 0,6 %,
- P: < 0,1 %,
- S: < 0,03 %,
- Al: < 0,1 %,
- N: < 0,02 %,
- optional Cr: < 0,1 %,
- optional Ni: < 0,1 %,
- optional Cu: < 0,1 %,
- optional Ti: < 0,01 %,
- optional B: < 0,005 %,
- optional Nb: < 0,01 %,
- optional Mo: < 0,02 %,
- optional Sn: < 0,03 %,
- Rest Eisen und unvermeidbare Verunreinigungen,
wobei das Stahlflachprodukt ein martensitfreies Gefüge sowie eine Planheit von 5 I-Units oder weniger aufweist.

2. Stahlflachprodukt nach Anspruch 1, **dadurch gekennzeichnet, dass** es in einem gealterten Zustand eine Streckgrenze von 300 MPa bis 700 MPa und bevorzugt von 450 MPa bis 650 MPa aufweist, wobei der gealterte Zustand des Stahlflachprodukts entweder auf natürliche Weise durch eine Lagerung bei Raumtemperatur und/oder durch eine Lackierung mit anschließender Trocknung oder auf künstliche Weise durch Erwärmung des Stahlflachprodukts für 20 Minuten auf Temperaturen im Bereich von 200°C bis 210 °C herbeigeführt ist.

3. Stahlflachprodukt nach Anspruch 1 oder 2, **dadurch gekennzeichnet, dass** es in einem gealterten Zustand eine Bruchdehnung (A) von 10 % oder mehr, bevorzugt bis 35 % und besonderes bevorzugt von 15 % oder mehr, insbesondere bis zu 30 %, aufweist, wobei der gealterte Zustand des Stahlflachprodukts entweder auf natürliche Weise durch eine Lagerung bei Raumtemperatur und/oder durch eine Lackierung mit anschließender Trocknung oder auf künstliche Weise durch Erwärmung des Stahlflachprodukts für 20 Minuten auf Temperaturen im Bereich von 200°C bis 210 °C herbeigeführt ist.

4. Stahlflachprodukt nach einem der voranstehenden Ansprüche, **dadurch gekennzeichnet, dass** das Stahlgefüge des Stahlflachprodukts weder Martensit noch Bainit und bevorzugt auch kein Austenit enthält und besonders bevorzugt zumindest im Wesentlichen nur Ferrit oder Ferrit sowie einen oder mehrere der Gefügebestandteile Zementit und Perlit enthält.

5. Stahlflachprodukt nach einem der voranstehenden Ansprüche, **dadurch gekennzeichnet, dass** das Stahlflachprodukt eine Randwelligkeit mit einer maximalen Wellenhöhe (h) von 1,5 mm, bevorzugt von weniger als 1,0 mm, und/oder über eine Länge des Stahlflachprodukts in Walzrichtung von 1 Meter weniger als sechs Wellen mit einer Wellenhöhe (h) von mehr als 1,0 mm aufweist.

6. Verfahren zur Herstellung eines Stahlflachprodukts nach einem der voranstehenden Ansprüche, wobei das Stahlflachprodukt aus einem Stahl mit der Komposition des Anspruchs 1 erhältlich ist durch
- Warmwalzen einer aus dem Stahl erzeugten Bramme zu einem Warmband,
- Kaltwalzen des Warmbands bei einem Reduktionsverhältnis von mindestens 80 % zu einem kaltgewalzten Stahlband auf eine Dicke von weniger als 0,49 mm,
- Glühen des kaltgewalzten Stahlbands in einem Durchlaufglühofen bei einer Glühtemperatur oberhalb der Rekristallisationstemperatur, wobei das kaltgewalzte Stahlband in dem Durchlaufglühofen induktiv auf die Glühtemperatur erhitzt und über eine vorgegebene Haltezeit auf der Glühtemperatur gehalten wird,
- Primäres Abkühlen des rekristallisierend geglühten Stahlbands auf eine Absprungtemperatur (Tq), die unterhalb der Umwandlungstemperatur von 723°C liegt und bevorzugt kleiner als 690°C ist, mit einer maximalen primären Kühlrate von weniger als 1000 K/s, bevorzugt weniger als 400 K/s und insbesondere weniger als 200 K/s,
- Sekundäres Abkühlen des Stahlbands auf eine Temperatur von weniger als 80°C, bevorzugt weniger als 50°C und besonders bevorzugt weniger als 30°C, mit einer sekundären Kühlrate von mehr als 1000 K/s, bevorzugt mehr als 1500 K/s und insbesondere von mehr als 2000 K/s.

7. Verfahren nach dem voranstehenden Anspruch, wobei das primäre Abkühlen durch eine Gaskühlung, insbesondere einen Gasstrahl, erfolgt und das sekundäre Abkühlen durch eine Wasserkühlung, insbesondere durch Eintauchen des Stahlbands in ein Wasserbad mit einer Wassertemperatur von 80°C oder weniger, bevorzugt von 50°C oder weniger, besonders bevorzugt von 30°C oder weniger und insbesondere im Bereich von 15°C bis 50°C oder im Bereich von 15°C bis 30°C erfolgt.

8. Verfahren nach einem der Ansprüche 6 oder 7, **dadurch gekennzeichnet, dass** das Stahlband nach dem Abkühlen mit einem Dressiergrad von 0,2 % bis 5 % dressiert wird, wobei die Streckgrenze des dressierten Stahlbands zwischen 300 und 500 MPa liegt, oder dass das Stahlflachprodukt nach dem Abkühlen mit einem Nachwalzgrad von mehr als 5 % bis 45 % kalt nachgewalzt wird und nach dem Nachwalzen eine Streckgrenze von 430 MPa bis 700 MPa aufweist.

9. Verfahren nach einem der Ansprüche 6 bis 8, **dadurch gekennzeichnet, dass** das kaltgewalzte Stahlband beim Glühen in dem Durchlaufglühofen induktiv mit einer Heizrate von mehr als 100 K/s und bevorzugt mit einer Heizrate von mehr als 300 K/s, insbesondere mit einer Heizrate von 400 K/s bis 600 K/s, auf die Glühtemperatur erhitzt wird.

10. Verfahren nach einem der Ansprüche 6 bis 9, **dadurch gekennzeichnet, dass** das kaltgewalzte Stahlband beim Glühen in dem Durchlaufglühofen während einer Haltezeit von weniger als 1 Sekunde, insbesondere zwischen 0,3 und 0,9 Sekunden, bevorzugt weniger als 0,7 Sekunden und insbesondere zwischen 0,5 und 0,6 Sekunden, auf der Glühtemperatur gehalten wird.

11. Verfahren nach einem der Ansprüche 6 bis 10, **dadurch gekennzeichnet, dass** die Glühtemperatur zwischen 725°C und 769°C liegt.

12. Verfahren nach einem der Ansprüche 6 bis 11, wobei das kaltgewalzte Stahlband beim primären Abkühlen mit einer primären Kühlrate von mindestens 25 K/s von der Glühtemperatur auf die Absprungtemperatur (Tq) gekühlt wird.

13. Verfahren nach einem der Ansprüche 6 bis 12, **dadurch gekennzeichnet, dass** die Oberfläche des Stahlflachprodukts, insbesondere unmittelbar nach dem sekundären Abkühlen, eine Oberflächenoxidation mit einer maximalen Oxidbelegung von 300 C/m², bevorzugt von weniger als 100 C/m², aufweist.

14. Verfahren nach einem der Ansprüche 6 bis 13, **dadurch gekennzeichnet, dass** die Absprungtemperatur (Tq) bei maximal 600°C und insbesondere zwischen 500°C und 600°C liegt.

15. Verwendung eines Stahlflachprodukts nach einem der Ansprüche 1 bis 5 zur Herstellung von tiefgezogenen Verpackungen oder Verpackungsteilen, wobei das Stahlflachprodukt bevorzugt eine Oberflächenbeschichtung enthält, insbesondere eine elektrolytisch aufgebrachte Zinn- und/oder Chrom-/Chromoxid-Beschichtung und/oder eine organische Beschichtung, insbesondere in Form eines Lacks oder einer Polymerfolie.
